Europäisches Patentamt

European Patent Office

Office européen des brevets

(19)

(11) Veröffentlichungsnummer: **0 047 332**
**B1**

(12) # EUROPÄISCHE PATENTSCHRIFT

(45) Veröffentlichungstag der Patentschrift:
16.05.84

(51) Int. Cl.³: **C 11 B 1/10, B 01 D 11/02**

(21) Anmeldenummer: **80105358.8**

(22) Anmeldetag: **08.09.80**

(54) **Vorrichtung zum kontinuierlichen Beschicken von Extrakteuren mit Extrahiergut und Extraktionsmittel und ihre Verwendung.**

(43) Veröffentlichungstag der Anmeldung:
**17.03.82 Patentblatt 82/11**

(45) Bekanntmachung des Hinweises auf die Patenterteilung:
**16.05.84 Patentblatt 84/20**

(84) Benannte Vertragsstaaten:
**BE DE FR GB IT NL**

(56) Entgegenhaltungen:
**FR - A - 2 158 310**
**GB - A - 1 147 709**
**US - A - 2 203 666**

(73) Patentinhaber: **Schumacher, Heinz, Höperfeld 26,
D-2050 Hamburg 80 (DE)**

(72) Erfinder: **Schumacher, Heinz, Höperfeld 26,
D-2050 Hamburg 80 (DE)**

(74) Vertreter: **Kohler, Maria, Dr. et al, Dr. M. Kohler
Dipl.-Ing.C. Gernhardt Dipl.-Ing. J. Glaeser
Patentanwälte Königstrasse 28, D-2000 Hamburg 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Vorrichtung zum kontinuierlichen Beschicken von Extrakteuren mit Extrahiergut und Extraktionsmittel und ihre Verwendung

Gegenstand der Erfindung ist eine Beschickungs- oder Füllvorrichtung für solche Extrakteure, bei denen im kontinuierlichen Durchsatz insbesondere ölhaltige pflanzliche Rohstoffe wie Ölsaat und Ölfrüchte mit einem organischen Löse- bzw. Extraktionsmittel behandelt und dabei die Glyceridbestandteile (Öle und Fette) in die extrahierte flüssige Phase übergeführt werden.

Als Extraktions- bzw. Lösemittel für Ölsaaten werden in der Technik praktisch nur Benzin, Hexan, Heptan, Octan oder deren Gemische mit Siedegrenzen von 60—100° C eingesetzt, insbesondere wenn man Öle und Fette zu Speisezwekken verwenden will.

Vorrichtungen für kontinuierlich arbeitende Extraktionsprozesse sind weitgehend bekannt, wozu auf die einschlägige Fachliteratur verwiesen wird. Dabei handelt es sich nach neuesten Entwicklungen entweder um vertikal angeordnete Extraktionstürme mit oder ohne Rührelemente, oder um horizontal konstruierte Rahmenbandextrakteure, Schneckenextrakteure, Topfextrakteure, Anlagen mit endlosen Transportbändern, Becherwerkextrakteure, Korbextrakteure usw.

Praktisch alle technisch brauchbaren Verfahren arbeiten im Gegenstrom, d. h., das frische Extraktionsmittel wird zur Schlußspülung des bereits weitgehend extrahierten Materials verwendet. Dabei gehen dieser Endphase der Extraktion vielfach mehrere Quell-, Wasch- und Extraktionsstufen voraus, bis schließlich eine Miscella anfällt, die je nach Extrakteur-Typ etwa 15—35% Öl und 65—85% Lösemittel enthält.

Im Anschluß an die Extraktion wird die Miscella, ggf. nach einer blanken Filtration und Klärung, destillativ bei niedrigen Temperaturen und vorwiegend indirekter Dampfbeheizung in Öl- und Lösemittel getrennt, was auf Grund der erheblichen Siedepunktunterschiede der Gemischbestandteile in zwei bis drei Stufen leicht möglich ist.

Wie allgemein bekannt, ist es für die Qualität eines pflanzlichen Öls, z. B. für Sojaöl von entscheidender Bedeutung, daß der Gehalt an Phosphaten (Lezithin) so niedrig wie möglich ist.

Diese Phosphatide sowie die Fettbestandteile des Öls zeigen eine erhebliche Instabilität gegenüber Autoxidationserscheinungen. Hierdurch ist zum Beispiel u. a. das Ranzigwerden der Öle bedingt. Daß die Haltbarkeit von Speiseölen begrenzt ist, wobei oft schon nach wenigen Wochen durch eben die genannte Autoxidation bedingt, unter Ausbildung von ungesättigten Aldehyden usw., ein saatartiger Fremdgeschmack auftritt, ist seit langem bekannt.

Ausführliche Untersuchungen haben nun ergeben, daß derartige, auch die Phosphatide ergreifende Autoxidationsreaktionen — unabhängig von der Art des Extraktionsmittels oder der Arbeitsbedingungen während der Extraktion — immer sofort einsetzen, wenn das Extraktionsmittel mit dem zerkleinerten Saatgutmaterial in Anwesenheit von Luftsauerstoff in Berührung kommt, oder wenn beim Zerkleinern des Saatguts freie, oxidable Oberflächen gebildet werden.

Die Autoxidation der Phosphatide ist auf das Zusammenwirken von Sauerstoff und gewissen, im Saatgut vorhandenen prooxygenen Substanzen, insbesondere Enzymen, zurückzuführen.

Um den Einfluß derartiger Enzyme zu eliminieren, wurde bereits vorgeschlagen, das Saatgut vor der Extraktion einer Hitzebehandlung zu unterziehen. Zwar werden dabei die Enzyme (Katalasen) im wesentlichen zerstört und damit die Autoxidation vermindert, doch sind hierzu erhebliche verfahrenstechnische, apparatebauliche und energetische Aufwendungen notwendig, die in keinem Vergleich zum möglichen Erfolg stehen.

Auch durch Schwefelverbindungen lassen sich die speziellen, die Spaltung bzw. die Autoxidation der Phosphatide (Lezithin) bewirkenden Enzyme inaktivieren. Derartige Schwefelverbindungen sind in erheblichem Maße im rohen Saatgut vorhanden. Sie werden aber unwirksam, wenn durch erhebliche Hitzeeinwirkung, insbesondere im Luftstrom, auch in Gegenwart von leicht flüchtigen Lösemitteln (Hexan) eine zu schnelle Ableitung aus dem Prozeß in Form von $H_2S$, COS, Merkaptanen usw. erfolgt.

Zusammenfassend ist somit die bisherige Technologie nicht in die Lage versetzt, die Autoxidation der Phosphatide (Lezithine) zu stoppen, weil einmal die Enzymzerstörung wirtschaftlich nicht vertretbar ist und zum anderen das für die Autoxidation verantwortliche Zusammenwirken von Enzym und Sauerstoff nicht behoben wurde. Erhebliche technische Probleme bereitet auch das Arbeiten mit toxischen, leicht enflammbaren, niedrig siedenden Extraktionsmitteln wie Benzin, Hexan usw.

Es ist daher erforderlich, daß unter betriebsmäßigen Bedingungen die Vermischung des Extraktionsguts mit dem Extraktionsmittel (Lösemittel) in einem völlig geschlossenen System erfolgt, das jeglichen Einfluß von Luftsauerstoff sowie das Auftreten von Leckstellen ausschließt.

Insbesondere bei der Extraktion von pflanzlichen Rohstoffen, aber auch bei anderen Extraktionsprozessen der technischen Chemie geht der eigentlichen Extraktion in horizontalen oder vertikalen Extrakteuren im allgemeinen eine Zerkleinerung des Rohstoffes voraus. Hierdurch wird das Gut in eine die Extraktion begünstigende feine Verteilung (Flocken) übergeführt.

Bei der Zerkleinerung (Flockung) von Ölsaaten, z. B. werden frische, d. h. oxidierbare Oberflächen freigelegt, wodurch schon vor der Extraktion erhebliche Qualitätseinbußen verzeichnet werden.

Es muß daher Sorge getragen werden, daß schon direkt im Anschluß an die Flockung der Einfluß von Sauerstoff (Luft) ausgeschlossen wird, d. h., daß der gesamte Apparatebereich zwischen Flockungsvorrichtung und Extrakteur, insbesondere aber das Gerät oder die Anlage für die Vermischung von zerkleinertem Gut und Extraktionsmittel ein vollkommen geschlossenes System bilden, das weder der Luft den Zutritt erlaubt, noch ein Austreten der Lösemitteldämpfe in die Atmosphäre gestattet.

Weiter ist es dem Fachmann geläufig, daß beim Zusammentreffen von geflocktem, d. h. zerkleinertem Rohmaterial mit dem Extraktionsmittel in Abhängigkeit von den Materialeigenschaften leicht Überhitzungen (spontaner Reaktions- bzw. Extraktionsbeginn) oder Zusammenballungen, Verklebungen usw. auftreten. Diese unerwünschten und den Verfahrensablauf in erheblichem Maße störenden Begleiterscheinungen erfordern einen optimal abgestimmten Mischprozeß zwischen zerkleinertem Extraktionsgut und Lösemittel.

Im allgemeinen verwendet man für die Vermischung Rührkessel, Transportschnecken und ähnliche Mischeinrichtungen, wobei darauf zu achten ist, daß die Mengenanteile gut geregelt und dosiert sind.

Dabei hat sich gezeigt, daß die richtige Dosierung großer Mengen äußerst schwierig ist, wobei die vorstehend abgeleiteten Probleme kaum bewältigt werden. Das zeitliche Vermischen kleiner Mengen, bei denen die vorstehend abgeleiteten Gefahren weniger auftreten, wirkt aber einschränkend auf die Wirtschaftlichkeit der Anlagenkapazität und ist daher nicht vertretbar.

Es ist die Aufgabe der Erfindung, eine Vorrichtung bzw. Anlage zur störungsfreien, kontinuierlichen Füllung von Extrakteuren zu schaffen, bei der das Vermischen von Extraktionsgut und Lösemittel auch in großen Durchsatzmengen störungsfrei verläuft, d. h., das unerwünschte Zusammenballen und Überhitzen in der Mischphase nicht auftritt, der Einfluß von Luftsauerstoff vollkommen ausgeschlossen ist, das Austreten von Lösemitteldämpfen vermieden und eine kontinuierliche, gleichmäßige Beschickung des Extrakteurs erreicht wird.

Gegenstand der Erfindung ist somit eine Vorrichtung zum störungsfreien, kontinuierlichen Füllen von Extrakteuren mit Extrahiergut und Extraktionsmittel, mit einer Transportschnecke als Mischsystem für die Reaktanten, dadurch gekennzeichnet, daß die zwischen der Rohstoffvorbereitung bzw. -zerkleinerung und dem Extrakteur geschaltete Vorrichtung aus einem geschlossenen System aus vertikalem Füll- und Ausgleichsbehälter und einer gegen die Horizontale geneigt angeordneten Schnecke besteht, wobei die Schnecke als Doppelschnecke ausgebildet ist, deren Schneckengänge sich im Bereich des Füll- und Ausgleichsbehälters kontinuierlich in Richtung des Austrags erweitern, der Füll- und Ausgleichsbehälter einen Rohrstutzen zur Einführung von Extraktionsmittel bzw. Extrakteur-Rückführlösung, einen Druckausgleichstutzen, einen in seiner Höhe verstellbaren Überlaufanschluß zur Rückführung von überschüssigem Extraktionsmittel bzw. Lösung zum Extrakteur und einen am oberen Ende in Höhe einer Abdeckung vorgesehenen Luftauslaßstutzen besitzt, wobei der Füll- und Ausgleichsbehälter im tiefsten Bereich der Schnecke luftdicht auf diese aufgesetzt ist und die Neigung der Schnecke so bemessen ist, daß der aus der Schneckengrundfläche und einer gedachten Linie gebildete Raum ständig mit Extraktionsgut und Lösemittel gefüllt ist.

Die kontinuierliche Vermischung von Extraktionsgut und Extraktionsmedium als Verfahren ist zwar bekannt und wird z. B. in der US-A-2 582 675 oder der GB-A-1 147 709 beschrieben. Diese Anlagen sind jedoch im allgemeinen an vertikale Extrakteure gebunden. Außerdem erlauben sie nicht die durch den erfindungsgemäßen engen Schneckengang beim Eintrag in die Schnecke erzielbare gute, klumpenfreie und sichere Homogenisierung, die erst allmählich bei zunehmendem Gangabstand der Schnecke, d. h. in Richtung zum Schneckenaustrag, also Extrakteureintrag, in eine gleichmäßige Suspension von zerkleinertem, partiell aufgeschlossenem Reaktionsgut, Lösemittel und bereits gebildeter Miscella übergeht.

Durch die Arbeitsweise der erfindungsgemäßen Vorrichtung wird dagegen dem Extrakteur eine absolut homogene Mischung angeboten, die nicht nur keine oxidierten Bestandteile enthält, sondern aus einem mit Lösemittel gleichmäßig durchtränkten Rohmaterial besteht.

Insgesamt gesehen kann die neue Vorrichtung zum kontinuierlichen Füllen von Extrakteuren auch mit diesem zu einer Einheit vereinigt werden, wozu es lediglich notwendig ist, den Entleerungsstutzen der Schnecke direkt mit dem Eingang des Extrakteurs zu vereinigen.

Entscheidend für einen optimalen Arbeitsprozeß ist bei der neuen Füllvorrichtung für Extrakteure einmal das Vorhandensein der Doppelschnecke, die bereits beim Vermischen von Rohstoff und Miscella eine verteilende, vielleicht sogar knetende Wirkung ausübt, weiter die Änderung der Schneckengänge, deren Abstände im Bereich des Füll- und Ausgleichsbehälters kontinuierlich zunehmen und am Ende dieser Abstandszunahme ein Mehrfaches des Abstands der Anfangsschneckengänge erreichen sowie ein aufeinander abgestimmtes System von Rohranschlüssen am Füll- und Ausgleichsbehälter.

Aus dem Stand der Technik ist ein derartiges System bisher nicht bekannt. Vielmehr erfolgt das Vermischen der Reaktanten entweder in normalen eingängigen Schnecken wie z. B. bei der GB-A-1 147 709 und der GB-A-1 250 343 oder in einem das Gut bzw. Gemisch nur transportierenden System wie bei der US-A-2 582 675.

Erst durch die erfindungsgemäße Kombination aus Füll- und Ausgleichsbehälter mit ganz spezifischen Anschlußsystemen für Lösemittel, Lösemittelüber- bzw. -rücklauf, Druckausgleich, Luftauslaß usw. an ganz bestimmten Stellen des Behälters, mit einem ganz spezifischen Schneckenaufbau und deren Neigung zur Horizontalen gelingt es, ein vollkommen abgeschlossenes, kontinuierlich arbeitendes System aufzubauen, das eine absolut störungsfreie, das Gut nicht beeinflussende und den Extrakteur entlastende Füllung des letzteren mit Frischmaterial, Lösemittel bzw. Miscella gewährleistet.

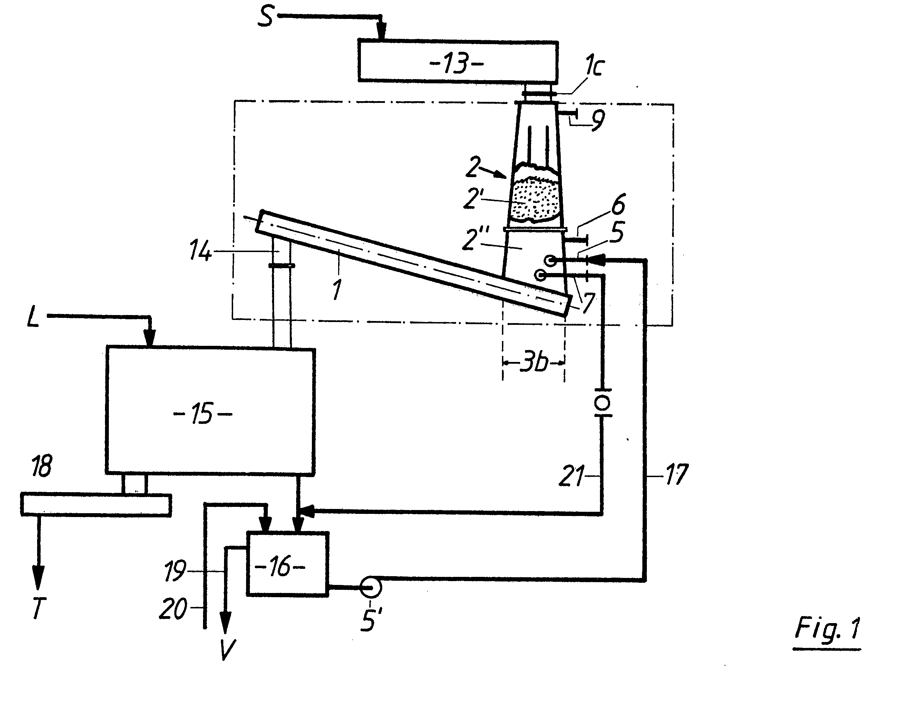

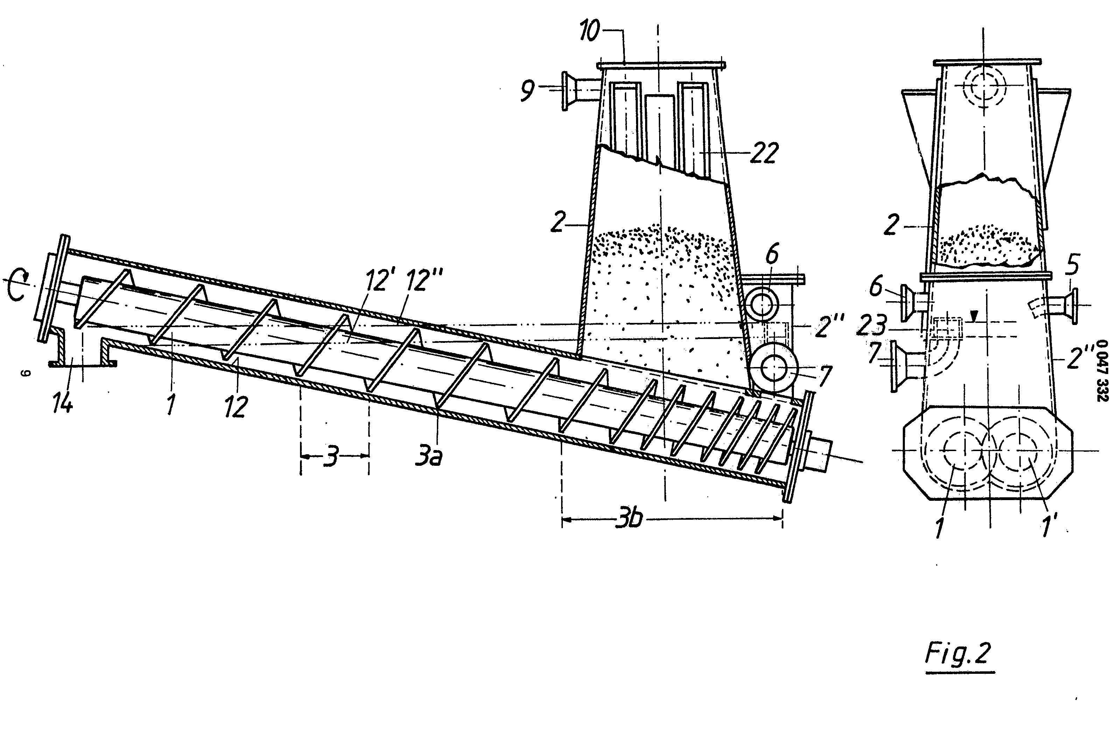

Die neue Vorrichtung und deren Wirkungsweise wird anschließend anhand der Fig. 1 und 2 beschrieben.

Dabei zeigt

Fig. 1 im Blockbild die wesentlichen Teile einer Extraktionsanlage mit eingebauter Füllvorrichtung gemäß der Erfindung und

Fig. 2 eine schematische Darstellung der Füllvorrichtung selbst.

Gemäß Fig. 1 besteht die Extraktionsanlage z. B. für Sojamaterial (hier nur beispielhaft genommen) aus einem (nicht dargestellten) Vorratsbunker, von wo das Material (S) zu einem kontinuierlich arbeitenden Zerkleinerer (Flocker) (13) gelangt. Über geeignete Dosiereinrichtungen, z. B. eine Meßblende (1c) treten die ggf. vorgetrockneten Flocken in den Flockenkasten (2') des Füll- und Ausgleichsbehälters (2) ein und werden im Miscellakasten (2'') am Eintritt (5) für rückgeführte Miscella mit letzterer benetzt. Die im Rohmaterial enthaltene Luft entweicht über den Luftauslaßstutzen (9). Im unteren Teil (3b) der Doppelschnecke (1, 1') (Fig. 2) wird das Gemisch sofort von den relativ eng liegenden Schneckengängen (3a) erfaßt und durchgemischt. Mit zunehmendem Schneckenanstieg beruhigt sich der Mischvorgang unter Ausbildung einer homogenen Suspension, die beim Austrag (14) aus der Schnecke austritt und in den Extrakteur (15) fällt. Die Arbeitsweise des Extrakteurs ist bekannt. Die Miscella wird im Tank (16) aufgefangen und über eine Pumpe (5') zum Eintritt (5) in den Füll- und Ausgleichsbehälter (2) bzw. den Miscellakasten (2'') zurückgeführt. Dabei versteht sich, daß im Leitungssystem (17) Zusatzaggregate wie Filter, Zentrifugen, Wärmeaustauscher, Miscellaabnahme- und ggf. Lösemittelzugabeelemente usw. eingebaut sind.

Der Rückstand der Extraktion gelangt über eine Förderschnecke (18) z. B. zu einem Toaster (T) und weiter zur Aufbereitung. Aus dem Tank (16) wird die Vollmiscella (V) über den Überlauf (19) abgeführt. Ein Kreislaufsystem (20) ist selbstverständlich vorgesehen.

Die erfindungsgemäße Vorrichtung zum störungsfreien kontinuierlichen Beschicken bzw. Füllen des Extrakteurs ist in Fig. 1 strichpunktiert erfaßt.

Fig. 2 zeigt den eigentlichen Aufbau der neuen erfindungsgemäßen Füllvorrichtung für Extrakteure. Die Vorrichtung besteht im wesentlichen aus der Doppelschnecke (1, 1'), deren Schneckengänge (3a) — wie ersichtlich — im Bereich (3b) in Richtung des Schneckenanstiegs zunehmend größeren Abstand aufweisen.

Der Neigungs- bzw. Anstiegswinkel der Schneckenachse gegenüber der Horizontalen liegt im allgemeinen bei 10—45°, insbesondere bei 30°, obwohl dieser Winkel für das Gesamtsystem nicht unbedingt ausschlaggebend ist. Die Schnecke ist selbstverständlich federnd gelagert oder flexibel aufgehängt. Auf die Wiedergabe derartiger Einzelheiten kann hier verzichtet werden.

Auf den Bereich (3b) zunehmender Schneckengangabstände ist der Füll- und Ausgleichsbehälter (2) aufgesetzt und mit der Schnecke vollkommen abdichtend verbunden. Der Füll- und Ausgleichsbehälter (2) hat im allgemeinen rechteckige Form und kann sich in Richtung des Deckels (10) verjüngen. Dieser Deckel hat eine geeignete Öffnung zur Einbringung des vorbehandelten Guts (S), das z. B. vom Flocker (13) kommt (Fig. 1). Wenig unterhalb des Deckels (10) befindet sich ein Luftauslaßstutzen (9) z. B. für ein Saugsystem, mit dessen Hilfe die mit dem Feststoff eingebrachte Luft abgesaugt werden kann. Der Füll- und Ausgleichsbehälter (2) ist weiter in bekannter Weise mit Schaugläsern (22) usw. ausgestattet, die den Stand des locker aufgeworfenen Flockenmaterials im Flockenkasten (2') erkennen lassen. Im Miscellakasten (2'') befinden sich zwei Anschlußstutzen, der Eintritt (5) und der Überlaufanschluß (7), deren Position für die Funktion der neuen Vorrichtung von besonderer Bedeutung ist. Der Eintritt (5) ist mit der Leitung (17) verbunden (siehe Fig. 1), durch die rückgeführte Extraktionslösung (Miscella) oder auch zusätzliches Lösemittel (L) in den Miscellakasten (2'') eingebracht wird. Überlaufanschluß (7) verbindet die Mischzone bzw. den Miscellakasten (2'') mit einer Rückführleitung (21) zum Tank (16) — Fig. 1 — und mündet im Innern der Mischzone in einen verstell- bzw. regelbaren Überlauf (23), dessen jeweilige Position den Spiegel (12', 12'') bestimmt und dafür Sorge trägt, daß der Raum zwischen der Schneckengrundfläche (12) und dem Spiegel (12') ständig mit Extraktionsmasse (Suspension) gefüllt ist.

Die Schnecke (1) ist als Doppelschnecke (1, 1') mit ineinander greifenden Schneckengängen (3a) ausgebildet. Der Abstand (3) der Schneckengänge hat im Bereich (3b), d. h. im Bereich des aufgesetzten Füll- und Ausgleichsbehälters (2) einen veränderlichen Wert. Der Abstand erweitert sich hier in Richtung des Austrags (14) entweder gruppenmäßig, d. h. mehrere Schneckengänge haben gleichen Abstand und sind zu Gruppen zusammengefaßt, oder asymptotisch von Schneckengang zu Schneckengang ansteigend.

Die Anordnung des Eintritts (5) und des Überlaufanschlusses (7) die Drehgeschwindigkeit der Schnecke (1), die elektronisch gesteuert wird, und der Anstiegswinkel der Schnecke sind so eingestellt, daß der Spiegel der Suspension innerhalb des Systems aus Schnecke (1) und Füll- und Ausgleichsbehälter (2) etwa der Linie (12') entspricht, jedoch innerhalb der Schnecke nicht über die Linie (12'') ansteigt. Durch die elektronische Steuerung der Drehzahl der Schnecke wird außerdem gewährleistet, daß sich im Behälter (2) oberhalb des Miscellaspiegels (12')/(12") stets eine Schicht Extraktionsgut befindet.

Mit der neuen Vorrichtung gelingt eine störungsfreie, jeglichen Luftsauerstoff auf das geflockte Material und die Mischung mit dem Lösemittel bzw. der Miscella ausschließende Einführung in den Extrakteur. Die Oxidation von Ölen während des Extraktionsvorgangs wird vollkommen ausgeschlossen.

Bei bisher bekanntgewordenen Extrakteur-Füllvorrichtungen wird zusammen mit dem Extraktionsgut in erheblichem Maße immer noch Luftsauerstoff in den Extraktionsraum eingetragen. Dies macht es notwendig, daß das gesamte System über Entlüftungseinheiten mit umfangreichen Benzinrückgewinnungsanlagen verbunden ist. Die in bekannten Extraktionsanlagen zusammen mit dem Extraktionsgut eingebrachte Luft kann sich je nach Temperatur bis auf 3 kg/m³ Abluft mit Extraktionsmittel, insbesondere Hexan, aufsättigen, das sowohl aus wirtschaftlichen als auch aus sicherheitsbedingten Gründen aus der Abluft zurückgewonnen werden muß.

Lösemittelrückgewinnungsanlagen erfordern aber neben hohen Investitionen umfangreiche Wartung und einen äußerst komplexen Apparateaufbau. Ihre Gefahr für die Umwelt ist hinreichend bekannt. Betriebsunfälle durch Ausbildung explosiver Gemische aus verdampftem Lösemittel und Luft sind keine Seltenheit.

Durch die Maßnahmen der Erfindung entfallen derartige Lösemittelrückgewinnungsanlagen. Damit wird insgesamt die Sicherheit von Extraktionsanlagen mit Lösemitteln erheblich verbessert. Es sei schließlich daran erinnert, daß Betriebsstörungen im Extrakteur zu erheblichen Überdrucken führen können. Diese Drucke genügen, um Lösemittelgase durch das Leitungssystem und bekannte Füllvorrichtungen bis in die Saatgutaufbereitung zurückzuführen, wo hierdurch bedingte Explosionen und Brände nicht selten sind.

Durch die Maßnahmen der Erfindung werden Lösemittelverluste vollkommen vermieden, desgleichen durch den Sauerstoffausschluß jegliche Apparatekorrosion verhindert.

Die elektronisch gesteuerte Drehzahl der Doppelschnecke gestaltet die Kapazität der Anlage variabel; der Flockenstand im Füll- und Ausgleichsbehälter (2) kann sich bis zum Luftauslaßstutzen (9) bewegen; das System der Doppelschnecke mit verändertem Schneckengangabstand trägt zu einer frühen Homogenisierung und einer gleichmäßigen und beruhigten Weiterleitung in den Extrakteur bei. Hierdurch wird der Extrakteur erheblich entlastet.

**Patentansprüche**

1. Vorrichtung zum störungsfreien, kontinuierlichen Füllen von Extrakteuren mit Extrahiergut und Extraktionsmittel, mit einer Transportschnecke als Mischsystem für die Reaktanten, dadurch gekennzeichnet, daß die Vorrichtung aus einem geschlossenen System aus vertikalem Füll- und Ausgleichsbehälter (2) und einer gegen die Horizontale geneigt angeordneten Schnecke (1) besteht, wobei die Schnecke (1) als Doppelschnecke (1, 1') ausgebildet ist, deren Schneckengänge (3a) sich im Bereich (3b) des Füll- und Ausgleichsbehälters (2) kontinuierlich in Richtung des Austrags (14) zum Extrakteur (15) erweitern, der Füll- und Ausgleichsbehälter (2) einen Rohrstutzen als Eintritt (5) zur Einführung von Extraktionsmittel bzw. Extrakteur-Rückführlösung, einen Druckausgleichsstutzen (6), einen in seiner Höhe verstellbaren Überlaufanschluß (7) zur Rückführung überschüssigen Extraktionsmittels bzw. Lösung zum Extrakteur und einem am oberen Ende in Höhe der Abdeckung (10) vorgesehenen Luftauslaßstutzen (9) besitzt, wobei der Füll- und Ausgleichsbehälter (2) im tiefsten Bereich der Schnecke (1) luftdicht auf diese aufgesetzt ist und die Neigung der Schnecke so bemessen ist, daß die Schnecke bis zu einem Spiegel (12'), der durch die Höhe des Überlaufs (23) des Überlaufanschlusses (7) definiert ist, füllbar ist.

2. Verwendung der Vorrichtung nach Anspruch 1 zum Füllen von Extrakteuren für Ölsaaten.

**Claims**

1. Apparatus for trouble-free, continuous charging of extractors with material to be extracted and with extraction solvent, said apparatus including a feed screw as a mixing system for the reactants, characterized in that the apparatus consists of a closed system comprising a vertical feeding and equalizing vessel (2) and a screw (1) inclined with respect to the horizontal, wherein the screw (1) is in the form of a double screw (1, 1') with the spacing of the screw turns (3a) in the area (3b) of the feeding and equalizing vessel (2) increasing continuously in the direction towards the discharge outlet (14) to the extractor (15), said feeding and equalizing vessel (2) including a tubular connection piece as an inlet (5) for the feeding in of extraction solvent or solution returned from the extractor, a pressure-equalizing connection piece (6), an overflow connection piece (7), adjustable in height, for returning excess extraction solvent or solution to the extractor, and an air outlet connection piece (9) provided at the upper end, at the height of the cover (10), said feeding and equalizing vessel (2) being mounted on the screw (1) in the lowermost area thereof in a manner providing an air-tight seal between the vessel and the screw, the inclination of the screw being so chosen that the screw can be filled up to a level (12') which is defined by the height of the overflow (23) of the overflow connection piece (7).

2. The use of the apparatus according to claim 1 for charging extractors for oil seeds.

## Revendications

1. Dispositif pour l'alimentation en continu et sans pannes d'extracteurs en matière à extraire et en agent d'extraction, comprenant une vis transporteuse comme système mélangeur pour les réactifs, caractérisé en ce que le dispositif est constitué d'un système clos, formé d'un réservoir de remplissage et d'égalisation (2) et d'une vis (1) inclinée par rapport à l'horizontale, la vis transporteuse (1) étant constituée d'une double vis (1, 1'), dont les filets (3a) vont, dans la région (3b) du réservoir de remplissage et d'égalisation (2), en s'élargissant de façon continue en direction du déversoir (14) dans l'extracteur (15), le réservoir de remplissage et d'égalisation (2) est pourvu d'un ajutage tubulaire (5) pour l'introduction de l'agent d'extraction et(ou) de la solution de recyclage venant de l'extracteur, d'une tubulure d'équilibrage de la pression (6), d'un raccordement à tropplein (7) à niveau réglable pour le retour de l'agent d'extraction ou de la solution en excès dans l'extracteur et d'un ajutage (9) pour l'évacuation de l'air, situé dans la partie supérieure au niveau du couvercle (10), le réservoir de remplissage et d'égalisation (2) étant monté de façon étanche sur la partie la plus basse de la vis (1) et l'inclinaison de la vis étant telle que son remplissage s'effectue jusqu'à un niveau (12') déterminé par le niveau (23) du trop-plein du raccordement à tropplein (7).

2. Utilisation du dispositif selon la revendication 1 pour le remplissage d'extracteurs de matières oléagineuses.

_Fig. 1_

0 047 332

*Fig.2*

0 047 332